# EUROPEAN PATENT SPECIFICATION

(11) **EP 2 371 898 B1**
(45) Date of publication and mention of the grant of the patent: **04.12.2013**
(21) Application number: 09835160.4
(22) Date of filing: 13.10.2009
(51) Int. Cl.: C08L 23/12, C08F 110/06, C08F 8/00, C08K 5/14

(54) **POLYPROPYLENE RESIN COMPOSITIONS HAVING HIGH MELT TENSION AND METHOD FOR PREPARING THE SAME**
POLYPROPYLENHARZZUSAMMENSETZUNGEN MIT HOHER SCHMELZSPANNUNG UND HERSTELLUNGSVERFAHREN DAFÜR
COMPOSITIONS DE RÉSINE DE POLYPROPYLÈNE PRÉSENTANT UNE TENSION ÉLEVÉE À L'ÉTAT FONDU ET PROCÉDÉ DE PRÉPARATION DE CELLES-CI

(30) Priority: 26.12.2008 KR 20080134858
(43) Date of publication of application: 05.10.2011
(73) Proprietor: Lotte Chemical Corporation, Seoul 156-010 (KR)
(72) Inventor: HAN, Sang Min, Daejeon 305-720 (KR); CHOI, Chang Hyoo, Daejeon 305-720 (KR)
(74) Representative: Higgin, Paul
(86) International application number: PCT/KR2009/005886
(87) International publication number: WO 2010/074394

(56) References cited:
- EP-A1- 0 208 330
- JP-A- 2000 026 697
- JP-A- 2001 026 686
- JP-A- 2003 138 075
- JP-A- 2004 176 061
- KR-A- 20020 029 215
- KR-B1- 100 236 488
- KR-B1- 100 511 516
- US-A1- 2003 229 169
- US-A1- 2008 194 752

## Description

### [Technical Field]

The present invention relates to a polypropylene resin composition having high melt tension and a method for preparation thereof and, more particularly, to a polypropylene resin composition having excellent melt tension and a process for preparing the same by stepwise reaction of polypropylene with at least two organic peroxides having different half-life distributions.

### [Background Art]

In general, polypropylene resin has favorable formability and chemical resistance, shows relatively high tensile strength, bending strength (or flexural strength), rigidity, has economic benefits, and is employed in various applications including, for example, injection molding or extrusion. However, such polypropylene also has a demerit of low melt tension, thus entailing difficulties in application of polypropylene in various forming processes requiring high melt tension such as large-scale vacuum/pressure forming, foaming or extrusion-coating.

Accordingly, since 1980, a great deal of studies have been conducted to improve melt tension of polypropylene and some have recently been manufactured into commercially available products. Examples of such manufactured and commercially available products may include Pro-fax series products (Lyondell Basell Co.), DapolyTM (Borealis Co.) or NEWSTREN (Chisso Corp.). These products are known to be manufactured by a variety of techniques such as irradiation cross-linking, reactive extrusion, polymerization, etc.

Although high melt tension polypropylene prepared through electron beam irradiation has excellent performance, installation and operation of irradiation instruments may incur high costs while productivity is relatively low, in turn increasing product costs. High melt tension polypropylene prepared through polymerization and using a catalyst has relatively reduced efficiency for introduction of a long side-chain structure, in turn restricting improvement in melt tension. Meanwhile, reactive extrusion in which an organic peroxide reacts with polypropylene and then is introduced into long side chains of polypropylene, entails problems such as increased production time, low productivity, etc., since reaction conditions are applied to individual stages during arrangement of reaction processes in proportion to half-life temperature of the organic peroxide. Moreover, using a reactive monomer may cause problems such as offensive odor due to monomer residue, increase in production costs, or the like.

More particularly, a method for preparation of high melt tension polypropylene which includes reactive extrusion using a vinyl based cross-linking agent and an organic peroxide to conduct cross-linking reaction, may entail problems due to cross-linking of the produced polypropylene such as surface failure, Gel formation or economical disadvantage, and problems due to residue of a vinyl based cross-linking agent.

With regard to preparation of a polypropylene resin composition having high melt tension through continuous extrusion, studies have recently focused upon use of organic peroxides having a specific half-life temperature (Korean Patents Nos. 03330308 and 0511516). Such techniques involve introduction of a long side-chain structure by reaction of an organic peroxide having a low half-life temperature in an extruder. However, in order to produce high melt tension polypropylene having a long side-chain structure, a polypropylene chain must first be cut and then the cut chain must be recombined. However, when chain cutting and recombination are simultaneously performed according to the conventional art, it is difficult to introduce a sufficient amount of long side chains into a main chain of polypropylene and bonding efficiency is thus deteriorated. Accordingly, the foregoing technique may attain higher melt tension than products obtained through polymerization, and have economical merits over products manufactured by other known processes. However, as compared to products manufactured through electron beam irradiation and/or reactive extrusion using reactive monomers, products prepared by the foregoing continuous extrusion have lower melt tension.

More particularly, among the prior art, Korean Patent No. 0330308 discloses a polypropylene resin composition having high melt tension and a method for preparation thereof in a general extruder by adding an organic peroxide having a specific half-life temperature to polypropylene. However, the prepared polypropylene resin composition has an MI of 0.5 or less of a final product, in turn having poor fluidity. On the other hand, if MI is increased, melt tension of the final product may be deteriorated.

Korean Patent No. 0511516 discloses a polypropylene resin composition having high melt tension and a method for preparation thereof by reacting at least two polypropylene resins with an organic peroxide having a specific half-life temperature. However, since this technique uses organic peroxides having similar half-life properties, chain recombination reactivity is relatively decreased and ability to introduce long side-chains into a main chain of polypropylene is reduced, as compared to the foregoing methods. As a result, the final product obtained by the above method entails a disadvantage of low melt tension.

### [Disclosure]

### [Technical Problem]

In order to solve conventional problems as described above, certain embodiments of the present invention are directed to provision of a polypropylene resin composition having excellent physical properties, prepared by stepwise reaction of polypropylene with at least two organic peroxides having different half-life distributions, in an extruder specially designed to perform continuous reactive extrusion, so as to develop high melt tension polypropylene.

Also, another object of certain embodiments of the present invention is to provide a method for preparation of polypropylene having economic benefits, as compared to processes of manufacturing commercially available polypropylene compositions.

### [Technical Solution]

The present invention is as set out in the independent claims.

In one aspect of the disclosure useful in understanding examples of the invention there is provided a high melt tension polypropylene resin composition which includes:
1 to 90 wt. parts of the following component (A); 10 to 99 wt. parts of component (B); 0.1 to 2 wt. parts of component (C); and 0.1 to 2 wt. parts of component (D), relative to a total weight of the composition.
   (A) a propylene homopolymer or copolymer having a melt index (ASTM 1238, g/10min) of 0.1 to 10.0.
   (B) a propylene homopolymer or copolymer having a melt index of 2.0 to 80.0g/10min.
   (C) an organic peroxide having a 10 hour half-life temperature of 90 to 200°C.
   (D) an organic peroxide having a 10 hour half-life temperature of 80°C or less.

In this regard, the organic peroxide (C) may be selected from a group consisting of 1,1-di(t-butylperoxy)cyclohexane, 2,2-di(4,4-di-(t-butylperoxy)cyclohexyl)propane, t-butyl peroxymaleic acid, t-butyl peroxy-3,5,5-trimethylhexanoate, t-butylperoxy isopropyl monocarbonate, t-butyl peroxy 2-ethylhexyl monocarbonate, 2,5-di-methyl-2,5-di(benzoylperoxy)hexane, t-butyl peroxyacetate, 2,2-di-(t-butylperoxy)butane, t-butyl peroxybenzoate, n-butyl 4,4-di-(t-butylperoxy)valerate, di(2-t-butylperoxyisopropyl)benzene, dicumyl peroxide, 2,5-dimethyl-2,5-di(t-butylperoxy)hexane, t-butyl cumyl peroxide, p-menthane hydroperoxide, 2,5-dimethyl-2,5-di(t-butylperoxy)hexyne-3, isopropylcumyl hydroperoxide, 1,1,3,3-tetramethylbutyl hydroperoxide, cumene hydroperoxide, t-butyl hydroperoxide and 2,3-dimethyl-2,3-diphenylbutane.

Also, the organic peroxide (D) may be selected from a group consisting of dibenzoyl peroxide, di(3-methylbenzoyl)peroxide, di(4-methylbenzoylperozide), t-butylperoxy-2-ethylhexanoate, disuccinic acid peroxide, 2,5-dimethyl-2,5-di(2-ethylhexanonylperoxy)hexane, dilauroyl peroxide, 1,1,3,3-tetramethylbutylperoxy-2-ethylhexanoate, di(3,5,5-trimethylhexanoyl)peroxide, t-butyl peroxypivalate, t-hexyl peroxypivalate, t-butyl peroxyneoheptanoate, t-butyl peroxyneodecanoate, t-hexyl peroxyneodecanoate, di(2-ethylhexyl)peroxydicarbonate, 1,1,3,3-tetramethylbutyl peroxyneodecanoate, diisopropyl peroxydicarbonate, cumyl peroxyneodecanoate, di-n-propyl peroxydicarbonate and diisobutyryl peroxide.

In another aspect of the disclosure there is also provided a method for preparation of a high melt tension polypropylene resin composition, which includes: sufficiently mixing a polypropylene homopolymer and copolymer and an organic peroxide (C) as a reaction initiator in a mixer under an inert atmosphere and then feeding the mixture into an extruder; adding an organic peroxide (D) as a reaction agent to the middle of the extruder through side feeding; and conducting continuous melt reaction in a twin-screw extruder having an L/D of 35 or more.

### [Advantageous effects]

According to certain embodiments of the present invention, a high melt tension polypropylene resin composition has excellent long side-chain introduction capability, in turn exhibiting excellent melt tension behavior and superior formability. In addition, the polypropylene resin composition of the present invention may have economic benefits, as compared to conventional processes for manufacturing polypropylene resin compositions. Hence, the present invention may have advantages in generating new demands for the foregoing resin composition.

### [Best Mode]

Embodiments of the present invention provide a polypropylene resin composition having excellent melt tension, prepared by stepwise reaction of polypropylene with at least two organic peroxides having different half-life distributions in an extruder specially designed to perform continuous reactive extrusion.

In other words, if polypropylene having a polymer chain of tertiary carbon atoms reacts with an organic peroxide having a relatively long half-life (that is, a 10 hour half-life temperature of not less than 90°C), chain degradation may occur. Specifically, free radicals of the organic peroxide mostly react with tertiary-CH groups and cause chain degradation at β-sites of tertiary-carbon atoms, which is referred to as 'β-scission.' Such reaction may modify a linear chain structure of polypropylene, thus initiating production of high melt tension polypropylene. On the other hand, when polypropylene reacts with an organic peroxide having a relatively short half-life (that is, a 10 hour half-life temperature of not more than 70°C) or a specific half-life temperature, chain-recombination may occur.

As such, if at least two organic peroxides having different properties are used for stepwise reaction in front and middle parts of an extruder, chain-recombination may be induced while activating suitable initiation reaction such as chain degradation in a main chain. Therefore, as compared to existing processes, long side-chain may be efficiently introduced, thereby enabling production of polypropylene having enhanced melt tension.

For this purpose, a resin composition of the present invention comprises: 1 to 90 wt. parts of component (A); 10 to 99 wt. parts of component (B); and 0.1 to 2 wt. parts of component (C) and 0.1 to 2 wt. parts of component (D), relative to 100 wt. parts of polypropylene resin components (A) and (B).

Here, component (A) is a propylene homopolymer or copolymer having a melt index (ASTM 1238, g/10min) of 0.5 to 5.0; component (B) is a propylene homopolymer or copolymer having a melt index of 10.0 to 80.0g/10min; component (C) is an organic peroxide having a relatively high half-life temperature; and component (D) is another organic peroxide having a relatively low half-life temperature as claimed in claim 1.

Hereinafter, individual components of the foregoing composition according to the present invention will be described in detail.

### Components A and B

Polypropylene (A) used in the present invention has a melt index ranging from 0.5 to 5g/10min. If using polypropylene having a melt index of less than 0.1g/10min, disadvantages of gel formation, surface failure such as fisheye, or the like may be frequently encountered. On the other hand, if using polypropylene having a melt index of more than 10g/10min, a long side-chain structure formed during reaction may be weak, thus deteriorating melt tension.

Polypropylene (B) used in the present invention has a melt index ranging from 10.0 to 80.0g/10min. The inventive polypropylene resin composition may include the polypropylene (A) which mostly reacts with an organic peroxide to form a long side-chain structure, and the polypropylene (B) which controls overall melt flow index rather than effecting the reaction.

The foregoing polypropylene may be a propylene homopolymer or a two-member copolymer consisting of propylene and 10 mol% or less of an alpha-olefin monomer. The alpha-olefin monomer may have 2 to 10 carbon atoms and, in particular, may include 1-butene, 1-pentene, 1-hexene, 1-octene, etc.

### Component C

The organic peroxide (C) is an initiator and has a 10 hour half-life temperature of 90 to 150°C. Examples of such organic peroxide (C) may include, 1,1-di(t-butylperoxy)cyclohexane, 2,2-di(4,4-di-(t-butylperoxy)cyclohexyl)propane, t-butyl peroxymaleic acid, t-butyl peroxy-3,5,5-trimethylhexanoate, t-butyl peroxy isopropyl monocarbonate, t-butyl peroxy 2-ethylhexyl monocarbonate, 2,5-di-methyl-2,5-di(benzoylperoxy)hexane, t-butyl peroxyacetate, 2,2-di-(t-butylperoxy)butane, t-butyl peroxybenzoate, n-butyl 4,4-di-(t-butylperoxy)valerate, di(2-t-butylperoxyisopropyl)benzene, dicumyl peroxide, 2,5-dimethyl-2,5-di(t-butylperoxy)hexane, t-butyl cumyl peroxide, p-menthane hydroperoxide, 2,5-dimethyl-2,5-di(t-butylperoxy)hexyne-3, isopropylcumyl hydroperoxide, 1,1,3,3-tetramethylbutyl hydroperoxide, cumene hydroperoxide, t-butyl hydroperoxide, 2,3-dimethyl-2,3-diphenylbutane, and so forth.

### Component D

The organic peroxide (D) has a 10 hour half-life temperature of 70°C or less. Examples of such organic peroxide (D) may include dibenzoyl peroxide, di(3-methylbenzoyl)peroxide, di(4-methylbenzoylperozide), t-butyl peroxy-2-ethylhexanoate, disuccinic acid peroxide, 2,5-dimethyl-2,5-di(2-ethylhexanonylperoxy)hexane, dilauroyl peroxide, 1,1,3,3-tetramethylbutyl peroxy-2-ethylhexanoate, di(3,5,5-trimethylhexanoyl)peroxide, t-butyl peroxypivalate, t-hexyl peroxypivalate, t-butyl peroxyneoheptanoate, t-butyl peroxyneodecanoate, t-hexyl peroxyneodecanoate, di(2-ethylhexyl)peroxy dicarbonate, 1,1,3,3-tetramethylbutyl peroxyneodecanoate, diisopropyl peroxydicarbonate, cumyl peroxyneodecanoate, di-n-propyl peroxydicarbonate and diisobutyryl peroxide, and so forth.

An extruder used in the present invention to implement reactive extrusion of the foregoing components needs relatively increased L/D in order to sufficiently react at least two organic peroxides, in particular, may be a twin-screw extruder having an L/D of at least 35, and preferably, at least 50. Other than a typical twin-screw extruder used for melt reaction, a kneader, a Banbury mixer, a single-screw extruder and the like may also be used. However, in order to screw extruder having an L/D of at least 35, and preferably, at least 50. Other than a typical twin-screw extruder used for melt reaction, a kneader, a Banbury mixer, a single-screw extruder and the like may also be used. However, in order to simultaneously achieve excellent reactivity and high productivity, the twin-screw extruder is preferably used.

Meanwhile, to side feed the organic peroxide, at least one side feeder is required. The twin-screw extruder may be used at a melt reaction temperature of 160 to 240°C, preferably, 180 to 220°C. Within these ranges, the polypropylene mixture is sufficiently blended and completely reacts with an organic peroxide as a reaction initiator, so as to form a modified polypropylene without residue. When using a twin-screw extruder, a desired temperature profile may be obtained by suitably operating respective temperature controllers placed between a feeding zone entrance at the front end of the extruder and an outlet thereof.

The polypropylene resin composition of the present invention may be prepared by immersing the organic peroxide (C) in the polypropylene (A), sufficiently blending this mixture with the polypropylene (B) and other stabilizers such as an antioxidant in a Hansel mixer at room temperature under a nitrogen atmosphere for 2 to 8 minutes, and then, conducting melt reaction thereof in a reactive extruder. The organic peroxide (C) contained in the mixture serves as an initiative reaction agent to activate polypropylene, and then, enable side feeding of the organic peroxide (D) to recombine polypropylene radicals generated in the previous step, thus forming high melt tension polypropylene having a long side-chain structure.

### [Mode for Invention]

The present invention will be better understood from the following examples and comparative examples. However, these examples are proposed to illustrate the present invention but are not to be construed as limiting the scope of the invention.

### EXAMPLES

First, methods for determining and/or evaluating characteristics of various compositions used in the following examples and/or comparative examples will be described.
(1) Melt index:
   Measured according to ASTM D-1238 at 230°C, 2.16kgf.
(2) Melt tension:
   Measured using a Rheotens 71.97 apparatus manufactured by Gottfert GmbH, Germany. More particularly, resin is placed and extruded at 200°C and 50 rpm in a Brabender single-screw extruder manufactured by Brabender GmbH, Germany, followed by measurement of melt tension using a Rheotens fixed to the bottom of a die. The Rheotens is equipped with four wheels to stretch the resin and stretching speed is uniformly accelerated at a constant rate of 0.1s⁻¹. Measured values are represented in units of centinewtons (cN).

### Example 1

0.1 wt. parts of organic peroxide (C), relative to 100 wt. parts of polypropylene, was immersed in 50 wt. parts of a polypropylene homopolymer having a melt index of 1g/10min as component (A). Then, 50 wt. parts of a polypropylene homopolymer having a melt index of 12g/10min as component (B) as well as the above material were placed in a Hansel mixer and, after introduction of a nitrogen atmosphere to the Hansel mixer, sufficiently mixed for 4 minutes. After completing the mixing, the mixture was fed into a main feeder of a twin-screw extruder (L/D=52) at a temperature of 180 to 220°C, followed by side feeding 0.4 wt. parts of organic peroxide (D) relative to 100 wt. parts of polypropylene, in the middle of the extruder and conducting reactive extrusion thereof. Pellets obtained after extrusion were completely dried at 80°C for 24 hours. According to the foregoing methods, MI and melt tension were measured.

Results are shown in TABLE 1.

### Example 2

Pellets were prepared using 50 wt. parts of polypropylene homopolymer having a melt index of 1g/10min as component (A) and 50 wt. parts of polypropylene homopolymer having a melt index of 12.0g/10min as component (B) by the same procedures as described in Example 1, except that 0.3 wt. parts of organic peroxide (C) and 0.4 wt. parts of organic peroxide (D), relative to 100 wt. parts of polypropylene, were used.

### Example 3

Pellets were prepared using 50 wt. parts of polypropylene homopolymer having a melt index of 1g/10min as component (A) and 50 wt. parts of polypropylene homopolymer having a melt index of 12.0g/10min as component (B) by the same procedures as described in Example 1, except that 0.1 wt. parts of organic peroxide (C) and 0.8 wt. parts of organic peroxide (D), relative to 100 wt. parts of polypropylene, were used.

### Example 4

Pellets were prepared using 50 wt. parts of polypropylene homopolymer having a melt index of 1g/10min as component (A) and 50 wt. parts of polypropylene homopolymer having a melt index of 12.0g/10min as component (B) by the same procedures as described in Example 1, except that 0.3 wt. parts of organic peroxide (C) and 0.8 wt. parts of organic peroxide (D), relative to 100 wt. parts of polypropylene, were used.

### Comparative Example 1

Pellets were prepared using 50 wt. parts of polypropylene homopolymer having a melt index of 1g/10min as component (A) and 50 wt. parts of polypropylene homopolymer having a melt index of 12.0g/10min as component (B) by the same procedures as described in Example 1, except that organic peroxides (C) and (D) were omitted.

### Comparative Example 2

Pellets were prepared using 50 wt. parts of polypropylene homopolymer having a melt index of 1g/10min as component (A) and 50 wt. parts of polypropylene homopolymer having a melt index of 12.0g/10min as component (B) by the same procedures as described in Example 1, except that 0.3 wt. parts of organic peroxide (C), relative to 100 wt. parts of polypropylene, was used, while the organic peroxide (D) was omitted.

### Comparative Example 3

Pellets were prepared using 50 wt. parts of polypropylene homopolymer having a melt index of 1g/10min as component (A) and 50 wt. parts of polypropylene homopolymer having a melt index of 12.0g/10min as component (B) by the same procedures as described in Example 1, except that 0.8 wt. parts of organic peroxide (D), relative to 100 wt. parts of polypropylene, was used, while the organic peroxide (C) was omitted.

### Comparative Example 4

A composition comprising 100% polypropylene (A) having a melt index of 1g/10min was prepared and subjected to measurement of melt tension by the foregoing measurement method.

**TABLE 1**

| Components | | A | B | C | D | MI | Melt tension |
|---|---|---|---|---|---|---|---|
| | | Wt. parts | | | | g/10min | cN |
| Example | 1 | 50 | 50 | 0.1 | 0.4 | 3 | 18 |
| | 2 | 50 | 50 | 0.3 | 0.4 | 4 | 15 |
| | 3 | 50 | 50 | 0.1 | 0.8 | 2 | 25 |
| | 4 | 50 | 50 | 0.3 | 0.8 | 2.2 | 28 |
| Comparative Example | 1 | 50 | 50 | - | - | 5 | 8 |
| | 2 | 50 | 50 | 0.3 | - | 7 | 5 |
| | 3 | 50 | 50 | - | 0.8 | 1.8 | 24 |
| | 4 | 100 | - | - | - | 1 | 18 |

Polypropylene A: Melt Index - 1g/10min, a polypropylene homopolymer

Polypropylene B: Melt Index - 12g/10min, a polypropylene homopolymer

Organic peroxide C: An organic peroxide having high half-life temperature

Organic peroxide D: An organic peroxide having low half-life temperature

Content ratio of each of organic peroxides (C) and (D) is defined by weight ratio relative to 100 wt. parts of polypropylene resin

## Claims

1. A high melt tension polypropylene resin composition, comprising: 1 to 90 wt. parts of component (A); 10 to 99 wt. parts of component (B); and 0.1 to 2 wt. parts of component (C) and 0.1 to 2 wt. parts of component (D), relative to 100 wt. parts of polypropylene resin components (A) and (B), wherein,
component (A) is a propylene homopolymer or copolymer having a melt index (ASTM 1238, g/10min) of 0.5 to 5.0;
component (B) is a propylene homopolymer or copolymer having a melt index of 10.0 to 80.0g/10min;
component (C) is an organic peroxide having a 10 hour half-life temperature of 90 to 150°C, component (C) being an initiator to generate polypropylene radicals; and
component (D) is an organic peroxide having a 10 hour half-life temperature of 70°C or less, component (D) being a recombiner to recombine the polypropylene radicals.

2. The composition according to claim 1, wherein each of the polypropylenes (A) and (B) is a propylene homopolymer or a two-member copolymer including propylene and 10 mol% or less of alpha-olefin monomer and such alpha-olefin monomer has 2 to 10 carbon atoms.

3. The composition according to claim 1, wherein the organic peroxide as component (C) is selected from a group consisting of; 1,1-di(t-butylperoxy)cyclohexane, 2,2-di(4,4-di-(t-butylperoxy)cyclohexyl)propane, t-butyl peroxymaleic acid, t-butyl peroxy-3,5,5-trimethylhexanoate, t-butyl peroxy isopropyl monocarbonate, t-butyl peroxy 2-ethylhexyl monocarbonate, 2,5-di-methyl-2,5-di(benzoylperoxy)hexane, t-butyl peroxyacetate, 2,2-di-(t-butylperoxy)butane, t-butyl peroxybenzoate, n-butyl 4,4-di-(t-butylperoxy)valerate, di(2-t-butylperoxyisopropyl)benzene, dicumyl peroxide, 2,5-dimethyl-2,5-di(t-butylperoxy)hexane, t-butyl cumyl peroxide, p-menthane hydroperoxide, 2,5-dimethyl-2,5-di(t-butylperoxy)hexyne-3, isopropylcumyl hydroperoxide, 1,1,3,3-tetramethylbutyl hydroperoxide, cumene hydroperoxide, t-butyl hydroperoxide and 2,3-dimethyl-2,3-diphenylbutane.

4. The composition according to claim 1, wherein the organic peroxide as component (D) is selected from a group consisting of; dibenzoyl peroxide, di(3-methylbenzoyl)peroxide, di(4-methylbenzoylperozide), t-butyl peroxy-2-ethylhexanoate, disuccinic acid peroxide, 2,5-dimethyl-2,5-di(2-ethylhexanonylperoxy)hexane, dilauroyl peroxide, 1,1,3,3-tetramethylbutyl peroxy-2-ethylhexanoate, di(3,5,5-trimethylhexanoyl)peroxide, t-butyl peroxypivalate, t-hexyl peroxypivalate, t-butyl peroxyneoheptanoate, t-butyl peroxyneodecanoate, t-hexyl peroxyneodecanoate, di(2-ethylhexyl)peroxydicarbonate, 1,1,3,3-tetramethylbutyl peroxyneodecanoate, diisopropyl peroxydicarbonate, cumyl peroxyneodecanoate, di-n-propyl peroxydicarbonate and diisobutyryl peroxide.

5. A method for preparing a high melt tension polypropylene resin composition, the composition being according to claim 1, the method comprising:
(a) sufficiently mixing a polypropylene homopolymer or copolymer, and organic peroxide (C) having a 10 hour half-life temperature of 90 to 150°C as a reaction initiator for inducing chain degradation of the polypropylene in a mixer under an inert atmosphere, and then, feeding the mixture into an extruder;
(b) adding organic peroxide (D) having a 10 hour half-life temperature of 70°C or less as a reaction agent for inducing chain-recombination of the degraded polypropylene to the middle of the extruder through side feeding; and
(c) conducting continuous melt reaction in the extruder.

6. The method according to claim 5, wherein the mixing in step (a) is conducted by immersing the organic peroxide (C) in polypropylene (A), and then, blending this mixture with polypropylene (B).

7. The method according to claim 5, wherein the extruder used in step (c) has an L/D of at least 35.

8. The method according to claim 5, wherein the melt reaction in step (c) is performed at a reaction temperature of 160 to 240°C.

## Patentansprüche

1. Polypropylenharz-Zusammensetzung mit hoher Schmelzspannung, welche aufweist: 1 bis 90 Gew.-Anteile einer Komponente (A); 10 bis 99 Gew.-Anteile einer Komponente (B); und 0,1 bis 2 Gew.-Anteile einer Komponente (C) sowie 0,1 bis 2 Gew.-Anteile einer Komponente (D), bezüglich 100 Gew.-Anteilen der Polypropylenharz-Komponenten (A) und (B), wobei:
Komponente (A) ein Propylen-Homopolymer oder -Copolymer mit einem Schmelzindex von (ASTM 1238, g/10min) 0,5 bis 5,0 ist;
Komponente (B) ein Propylen-Homopolymer oder -Copolymer mit einem Schmelzindex von 10,0 bis 80,0 g/10min ist;
Komponente (C) ein organisches Peroxid mit einer 10-Stunden-Halbwertszeit-Temperatur von 90 bis 150°C ist, wobei Komponente (C) ein Initiator für die Erzeugung von Polypropylen-Radikalen ist; und
Komponente (D) ein organisches Peroxid mit einer 10-Stunden-Halbwertszeit-Temperatur von 70°C oder weniger ist, wobei Komponente (D) ein Rekombinator für die Rekombination der Polypropylen-Radikale ist.

2. Zusammensetzung nach Anspruch 1, bei welcher jedes der Polypropylene (A) und (B) ein Propylen-Homopolymer oder ein zweigliedriges Copolymer mit Propylen und 10 mol% oder weniger eines Alpha-Olefin-Monomers ist, wobei ein derartiges Alpha-Olefin-Monomer 2 bis 10 Kohlenstoffatome hat.

3. Zusammensetzung nach Anspruch 1, bei welcher das organische Peroxid als Komponente (C) aus einer Gruppe ausgewählt wird bestehend aus: 1,1-Di(t-butylperoxy)cyclohexan, 2,2-Di(4,4-di-(t-butylperoxy)cyclohexyl)propan, t-Butyl-peroxymaleinsäure, t-Butyl-peroxy-3,5,5-trimethylhexanoat, t-Butyl-peroxy-isopropyl-monocarbonat, t-Butyl-peroxy-2-ethylhexyl-monocarbonat, 2,5-Dimethyl-2,5-di(benzoylperoxy)hexan, t-Butyl-peroxyacetat, 2,2-Di(t-butylperoxy)butanat, t-Butyl-peroxybenzoat, n-Butyl-4,4-di-(t-butylperoxy)valerat, Di(2-t-butylperoxyisopropyl)benzol, Dicumyl-peroxid, 2,5-Dimethyl-2,5-di(t-butylperoxy)hexan, t-Butylcumyl-peroxid, p-Menthan-hydroperoxid, 2,5-Dimethyl-2,5-di(t-butylperoxy)hexin-3, Isopropylcumyl-hydroperoxid, 1,1,3,3-Tetramethylbutyl-hydroperoxid, Cumol-hydroperoxid, t-Butylhydroperoxid und 2,3-Dimethyl-2,3-diphenylbutan.

4. Zusammensetzung nach Anspruch 1, bei welcher das organische Peroxid als Komponente (D) aus einer Gruppe ausgewählt wird bestehend aus: Dibenzoyl-peroxid, Di(3-methylbenzoyl)peroxid, Di(4-methylbenzoylperozid), t-Butylperoxy-2-ethylhexanoat, Disuccinylsäure-peroxid, 2,5-Dimethyl-2,5-di(2-ethylhexanonyl-peroxy)hexan, Dilauroyl-peroxid, 1,1,3,3-Tetramethylbutyl-peroxy-2-ethylhexanoat, Di(3,5,5-trimethylhexanoyl)peroxid, t-Butyl-peroxypivalat, t-Hexyl-peroxypivalat, t-Butyl-peroxyneoheptanoat, t-Butyl-peroxyneodecanoat, t-Hexyl-peroxyneodecanoat, Di(2-ethylhexyl)peroxydicarbonat, 1,1,3,3-Tetramethylbutylperoxyneodecanoat, Diisopropyl-peroxydicarbonat, Cumylperoxyneodecanoat, Di-n-propyl-peroxydicarbonat und Diisobutyrylperoxid.

5. Verfahren zum Zubereiten einer Polypropylenharz-Zusammensetzung mit hoher Schmelzspannung, wobei die Zusammensetzung gemäss Anspruch 1 definiert ist und wobei das Verfahren die folgenden Schritte aufweist:
(a) ausreichendes Mischen eines Polypropylen-Homopolymers oder - Copolymers mit einem organischen Peroxid (C), welches eine 10-Stunden-Halbwertszeit-Temperatur von 90 bis 150°C hat, als Reaktionsinitiator zum Induzieren eines Kettenabbaus des Polypropylens in einer Mischvorrichtung unter einer inerten Atmosphäre, und anschliessendes Einspeisen des Gemisches in einen Extruder;
(b) Hinzugeben eines organischen Peroxids (D), welches eine 10-Stunden-Halbwertszeit-Temperatur von 70°C oder weniger hat, als Reaktionsmittel zum Induzieren einer Kettenrekombination des abgebauten Polypropylens in der Mitte des Extruders durch seitliches Einspeisen; und
(c) Durchführen einer kontinuierlichen Schmelzreaktion in dem Extruder.

6. Verfahren nach Anspruch 5, bei welchem das Mischen in Schritt (a) durchgeführt wird durch Eintauchen des organischen Peroxids (C) in Polypropylen (A) und anschliessendes Vermischen dieses Gemisches mit Polypropylen (B).

7. Verfahren nach Anspruch 5, bei welchem der in Schritt (c) verwendete Extruder ein L/D von mindestens 35 hat.

8. Verfahren nach Anspruch 5, bei welchem die Schmelzreaktion in Schritt (c) bei einer Reaktionstemperatur von 160 bis 240°C durchgeführt wird.

## Revendications

1. Composition de résine de polypropylène de tension élevée à l'état fondu, comprenant : 1 à 90 parties en poids de composant (A) ; 10 à 99 parties en poids de composant (B) ; et 0,1 à 2 parties en poids de composant (C) et 0,1 à 2 parties en poids de composant (D), par rapport à 100 parties en poids de composants (A) et (B) de la résine de polypropylène, dans laquelle
le composant (A) est un homopolymère ou copolymère de propylène présentant un indice de fusion (ASTM 1238, g/10 min) de 0,5 à 5,0 ;
le composant (B) est un homopolymère ou copolymère de propylène présentant un indice de fusion de 10,0 à 80,0 g/10 min ;
le composant (C) est un peroxyde organique présentant une température de demi-vie à 10 heures de 90 à 150 °C, le composant (C) étant un initiateur pour générer des radicaux de polypropylène ; et
le composant (D) est un peroxyde organique présentant une température de demi-vie à 10 heures de 70 °C ou inférieure, le composant (D) étant un recombineur pour recombiner les radicaux de polypropylène.

2. Composition selon la revendication 1, dans laquelle chacun des polypropylènes (A) et (B) est un homopolymère de propylène ou un copolymère à deux composants comprenant du propylène et 10 % en mole ou moins de monomère d'alpha-oléfine et un tel monomère d'alpha-oléfine comporte 2 à 10 atomes de carbone.

3. Composition selon la revendication 1, dans laquelle le peroxyde organique en tant que composant (C) est choisi dans un groupe constitué de :
1,1-di(t-butylperoxy)cyclohexane, 2,2-di(4,4-di-(t-butylperoxy)cyclohexyl)-propane, acide t-butyl-peroxymaléique, peroxy-3,5,5-triméthylhexanoate de t-butyle, peroxy-monocarbonate de t-butyle et d'isopropyle, peroxy-monocarbonate de t-butyle et de 2-éthylhexyle, 2,5-di-méthyl-2,5-di(benzoyl-peroxy)hexane, peroxyacétate de t-butyle, 2,2-di-(t-butylperoxy)butane, peroxybenzoate de t-butyle, 4,4-di-(t-butylperoxy)valérate de n-butyle, di(2-t-butylperoxyisopropyl)benzène, peroxyde de dicumyle, 2,5-diméthyl-2,5-di(t-butylperoxy)hexane, peroxyde de t-butyle et de cumyle, hydroperoxyde de p-menthane, 2,5-diméthyl-2,5-di(t-butylperoxy)hexyne-3, hydroperoxyde d'isopropylcumyle, hydroperoxyde de 1,1,3,3-tétraméthyl-butyle, hydroperoxyde de cumène, hydroperoxyde de t-butyle et 2,3-diméthyl-2,3-diphénylbutane.

4. Composition selon la revendication 1, dans laquelle le peroxyde organique en tant que composant (D) est choisi dans un groupe constitué de :
peroxyde de dibenzoyle, di(3-méthylbenzoyl)peroxyde, di(4-méthylbenzoyl-peroxyde), peroxy-2-éthylhexanoate de t-butyle, peroxyde de succinyle, 2,5-diméthyl-2,5-di(2-éthylhexanonylperoxy)hexane, peroxyde de dilauroyle, peroxy-2-éthylhexanoate de 1,1,3,3-tétraméthylbutyle, di(3,5,5-triméthylhexanoyl)peroxyde, peroxypivalate de t-butyle, peroxypivalate de t-hexyle, peroxynéoheptanoate de t-butyle, peroxynéodécanoate de t-butyle, peroxynéodécanoate de t-hexyle, di(2-éthylhexyl)peroxydicarbonate, peroxynéodécanoate de 1,1,3,3-tétraméthylbutyle, peroxydicarbonate de diisopropyle, peroxynéodécanoate de cumyle, peroxydicarbonate de di-n-propyle et peroxyde de diisobutyryle.

5. Procédé de préparation d'une composition de résine de polypropylène de tension élevée à l'état fondu, la composition étant selon la revendication 1, le procédé comprenant les étapes suivantes consistant à:
(a) mélanger de manière suffisante un homopolymère ou un copolymère de polypropylène, et un peroxyde organique (C) présentant une température de demi-vie à 10 heures de 90 à 150 °C en tant qu'initiateur de réaction pour l'induction de la dégradation de la chaîne du polypropylène dans un mélangeur sous une atmosphère inerte, et ensuite, le chargement du mélange dans un extrudeur ;
(b) ajouter un peroxyde organique (D) présentant une température de demi-vie à 10 heures de 70 °C ou inférieure en tant qu'agent réactionnel pour l'induction de la recombinaison de la chaîne du polypropylène dégradé au milieu de l'extrudeur par un chargement latéral ; et
(c) conduire d'une réaction continue à l'état fondu dans l'extrudeur.

6. Procédé selon la revendication 5, dans lequel le mélange dans l'étape (a) est conduit en immergeant le peroxyde organique (C) dans le polypropylène (A), et ensuite, en mélangeant ce mélange avec le polypropylène (B).

7. Procédé selon la revendication 5, dans lequel l'extrudeur utilisé dans l'étape (c) présente un rapport L/D d'au moins 35.

8. Procédé selon la revendication 5, dans lequel la réaction à l'état fondu dans l'étape (c) est réalisée à une température de réaction de 160 à 240 °C.
